# FASCICULE DE BREVET EUROPEEN

(11) **EP 0 716 955 B1**
(45) Date de publication et mention de la délivrance du brevet: **10.03.1999**
(21) Numéro de dépôt: 95402608.4
(22) Date de dépôt: 21.11.1995
(51) Int. Cl.: B60Q 3/04

(54) **Dispositif pour l'éclairage d'un ensemble d'équipement montés sur un support commun**
Beleuchtungseinrichtung für Armaturenbrettanlage
Lighting device for dashboard equipment

(30) Priorité: 12.12.1994 FR 9414908
(43) Date de publication de la demande: 19.06.1996
(73) Titulaire: EUROCOPTER, F-13725 Marignane Cédex (FR)
(72) Inventeur: Lenzi, Serge Claude, F-13014 Marseille (FR)
(74) Mandataire: Bonnetat, Christian

(56) Documents cités:
- EP-A- 0 547 943
- US-A- 3 622 773
- US-A- 4 181 925

## Description

La présente invention concerne un dispositif pour l'éclairage d'un ensemble d'équipements, tels que des cadrans ou des indicateurs d'appareils de mesure, montés sur une face externe d'un support commun. Quoique non exclusivement, elle est particulièrement appropriée à être mise en oeuvre pour l'éclairage des tableaux de bord d'installations industrielles ou de laboratoires, de véhicules terrestres, maritimes ou aériens, etc ..., regroupant des instruments dans un poste de commande ou de pilotage.

L'invention concerne de plus un tel ensemble d'équipements, ou tableau de bord, susceptible d'être éclairé par ledit dispositif.

On connaît déjà de nombreux dispositifs pour l'éclairage des tableaux de bord. Il s'agit essentiellement :
- de dispositifs d'éclairage intégré, dans lesquels chaque équipement possède son éclairage propre, constitué par des lampes ou des diodes électroluminescentes, par exemple. De tels dispositifs nécessitent de nombreuses liaisons électriques. Ils sont donc lourds, coûteux, difficiles à entretenir et ils ne permettent que difficilement d'éviter l'éclairage parasite de l'oeil d'un observateur, ce qui conduit à un contraste d'éclairement médiocre. De plus, ils peuvent éventuellement engendrer de la chaleur parasite ;
- de dispositifs à éclairage indirect, comportant des projecteurs ou des rampes d'éclairage (lampes, tubes à gaz électroluminescents) disposés à distance des équipements à éclairer et orientés vers ceux-ci. Ces dispositifs présentent sensiblement les mêmes inconvénients que ceux mentionnés à propos des dispositifs d'éclairage intégré, si ce n'est que les liaisons électriques sont moins nombreuses. Cependant, du fait que l'éclairage des équipements par les projecteurs et rampes est collectif, il en résulte que des parties non utiles des tableaux de bord sont éclairées (ce qui est défavorable au contraste), tandis qu'apparaissent certaines zones d'ombre (ce qui nuit à l'homogénéité de l'éclairage et fatigue les yeux de l'observateur ;
- des dispositifs à éclairage réparti, comportant une pluralité de sources lumineuses individuelles, montées entre les équipements et autour de chacun de ceux-ci. On comprendra que les inconvénients mentionnés ci-dessus se retrouvent dans de tels dispositifs ; et
- des dispositifs à éclairage par fibres optiques, tels que celui décrit dans le brevet FR-A-2 370 342. Ils comportent des diffuseurs de lumière disposés autour des équipements à éclairer, alimentés à partir de fibres optiques et éclairant lesdits équipements en lumière rasante. Ces dispositifs permettent de supprimer des câblages et les équipements électriques sur les instruments et tableaux de contrôle ou de commande et de centraliser la source d'éclairage. Il en résulte une amélioration de la fiabilité, une grande facilité d'entretien, une bonne protection de cette source, une bonne tenue en température, une simplification de la fabrication, du montage et de la maintenance, un gain de poids, un encombrement réduit et un prix de revient faible. Cependant, ils ne permettent pas d'éviter l'éclairement de parties inutiles des tableaux de bord et la formation de zones d'ombre.

La présente invention a pour objet un dispositif d'éclairage de tableaux de bord ou analogues permettant de remédier aux inconvénients, rappelés ci-dessus, des dispositifs connus et, de plus :
- de n'éclairer que les parties utiles desdits tableaux de bord, sans éclairer la structure entourant les équipements, de sorte que le contraste est excellent, ce qui optimise la lisibilité desdits équipements ;
- d'éviter des zones d'ombre sur lesdits tableaux de bord et d'éclairer ceux-ci de façon homogène ;
- d'éviter, ou au moins de minimiser, les reflets engendrés par des éléments involontairement éclairés ;
- de s'adapter aisément à la configuration des tableaux de bord, quels que soient leur conformation et la disposition et le nombre des instruments qu'ils comportent ; et
- de ne pas perturber l'usage de lunettes de vision de nuit.

A cette fin, selon l'invention, le dispositif pour l'éclairage d'un ensemble d'équipements, tels que des indicateurs ou des cadrans d'appareils de mesure, montés sur une face externe d'un support commun, est remarquable en ce qu'il comporte :
- une plaque électroluminescente, disposée de façon que sa face éclairante se trouve en regard de ladite face externe dudit support commun, ladite plaque électroluminescente occupant une position fixe, écartée par rapport à ladite face externe, et étant pourvue d'une pluralité d'ouvertures dont la disposition et les dimensions correspondent respectivement à la disposition et aux dimensions desdits équipements sur ledit support commun, de sorte que chacun de ceux-ci se trouve en regard d'une ouverture de dimensions appropriées de ladite plaque électroluminescente ;
- un parement, disposé sur la face non éclairante de ladite plaque électroluminescente, opposée à ladite face externe dudit support commun, et également pourvu d'une pluralité d'ouvertures dont la disposition et les dimensions sont semblables à la disposition et aux dimensions des ouvertures de ladite plaque électroluminescente; et
- des moyens d'alimentation électrique de ladite plaque électroluminescente.

Ainsi, chaque équipement est éclairé par la lumière qu'il reçoit de ladite plaque électroluminescente et qu'il réfléchit à travers les ouvertures superposées de ladite plaque électroluminescente et dudit parement. Tous les équipements sont donc éclairés de façon identique et seuls lesdits équipements sont vus éclairés. Il en résulte une bonne homogénéité d'éclairement et un contraste excellent par rapport au fond entourant lesdits équipements.

De préférence, lesdits moyens d'alimentation délivrent une tension alternative de quelques dizaines à quelques centaines de volts ayant une fréquence de quelques dizaines à quelques centaines de Hertz.

Selon un premier mode de réalisation, ladite plaque électroluminescente n'est constituée que d'un seul panneau électroluminescent qui, comme on le sait, est formé par un feuillet diélectrique électriquement excitable disposé entre une plaque métallique formant électrode et une plaque de verre conductrice. En variante, ladite plaque électroluminescente peut être constituée d'au moins deux tels panneaux électroluminescents, imbriqués l'un dans l'autre de façon que chacun d'eux puisse éclairer lesdits équipements. Dans ce cas, il est avantageux que la périphérie de chacune desdites ouvertures de la plaque électroluminescente soit constituée de portions consécutives appartenant à des panneaux électroluminescents différents.

Bien entendu, on peut envisager de faire fonctionner ledit dispositif d'éclairage en alimentant simultanément tous les panneaux électroluminescents. Cependant, au moins l'un des panneaux peut servir de secours et n'être alimenté que lorsque le ou les autres panneaux connaissent une panne.

Dans un mode de réalisation pratique avantageux, ladite plaque électroluminescente est constituée de deux panneaux électroluminescents imbriqués, tels que la portion de périphérie de chaque ouverture de ladite plaque appartenant à l'un desdits panneaux (le panneau correspondant au fonctionnement normal) est plus grande que la portion de périphérie de ladite ouverture appartenant à l'autre desdits panneaux (le panneau de secours).

Ainsi, on peut obtenir un éclairement satisfaisant en fonctionnement normal, tout en bénéficiant d'un éclairement de secours, plus faible mais suffisant.

La présente invention concerne également un ensemble d'équipements, tels que des indicateurs ou des cadrans d'appareils de mesure, montés sur une face externe d'un support commun, ledit ensemble étant caractérisé en ce qu'il comporte :
- une plaque électroluminescente, disposée de façon que sa face éclairante se trouve en regard de ladite face externe dudit support commun, ladite plaque électroluminescente occupant une position fixe, écartée par rapport à ladite face externe, et étant pourvue d'une pluralité d'ouvertures dont la disposition et les dimensions correspondent respectivement à la disposition et aux dimensions desdits équipements sur ledit support commun, de sorte que chacun de ceux-ci se trouve en regard d'une ouverture de dimensions appropriées de ladite plaque électroluminescente ; et
- un parement, disposé sur la face non éclairante de ladite plaque électroluminescente, opposée à ladite face externe dudit support commun, et également pourvu d'une pluralité d'ouvertures dont la disposition et les dimensions sont semblables à la disposition et aux dimensions des ouvertures de ladite plaque électroluminescente.

Avantageusement, pour éviter des difficultés de vision des équipements dues à la parallaxe, l'écartement entre la face externe dudit support commun et ladite plaque électroluminescente est de quelques millimètres.

Cet écartement peut être fixé par des entretoises disposées entre ledit support commun et ladite plaque électroluminescente. De telles entretoises peuvent être associées à des moyens de fixation de ladite plaque électroluminescente et dudit parement sur ledit support commun.

Les ouvertures dans ladite plaque électroluminescente peuvent, notamment pour une fabrication de série, être réalisées en les réservant dans ladite plaque lors de sa fabrication sans qu'il soit besoin de percer ladite plaque.

Cependant, en variante, lesdites ouvertures de ladite plaque électroluminescente, ainsi d'ailleurs que celles dudit parement, peuvent être obtenues par détourage dans ladite plaque ou dans ledit parement. Eventuellement, le détourage desdites ouvertures peut être fait en une seule opération, si la plaque électroluminescente et le parement sont préalablement superposés.

Il en résulte que ledit dispositif d'éclairage conforme à la présente invention peut facilement être adapté à toutes configurations et dimensions d'équipements, aussi bien en fabrication de série qu'en fabrication particulière, par exemple personnalisée. Ce dispositif d'éclairage peut même être monté sur des tableaux de bord déjà existants.

Bien que cela ne soit pas indispensable pour certains types de panneau électroluminescent, après détourage des ouvertures dans ladite plaque électroluminescente, il est avantageux que les bords des ouvertures détourées dans la plaque électroluminescente soient électriquement isolés.

A cet effet, l'isolation électrique des bords des ouvertures de la plaque électroluminescente peut être obtenue à l'aide de films plastiques transparents recouvrant les deux faces de ladite plaque électroluminescente et soudés entre eux dans lesdites ouvertures, le long desdits bords.

En variante, on peut prévoir que chaque ouverture dans ledit parement est plus petite que l'ouverture associée de ladite plaque électroluminescente, de façon à former des épaulements périphériques autour des bords des ouvertures de ladite plaque électroluminescente et l'isolation électrique desdits bords peut alors être obtenue par des joncs périphériques de matière isolante, reposant sur lesdits épaulements.

Les figures du dessin annexé feront bien comprendre comment l'invention peut être réalisée. Sur ces figures, des références identiques désignent des éléments semblables.
La figure 1 montre schématiquement, en vue de face, une partie d'un tableau de bord, par exemple d'aéronef.
La figure 2 est une coupe selon la ligne II-II de la figure 1, illustrant un premier mode de réalisation à panneau électroluminescent unique.
La figure 3 est une vue agrandie d'une partie de la coupe de la figure 2.
La figure 4 illustre la fixation de la plaque électroluminescente et du parement sur le support commun.
Les figures 5 et 6 montrent deux variantes de réalisation pour l'isolation électrique des bords des ouvertures percées dans ladite plaque électroluminescente.
Les figures 7 et 8 sont deux vues, respectivement selon les lignes VII-VII et VIII-VIII, d'une variante de réalisation dans laquelle la plaque électroluminescente est formée par deux panneaux électroluminescents imbriqués.

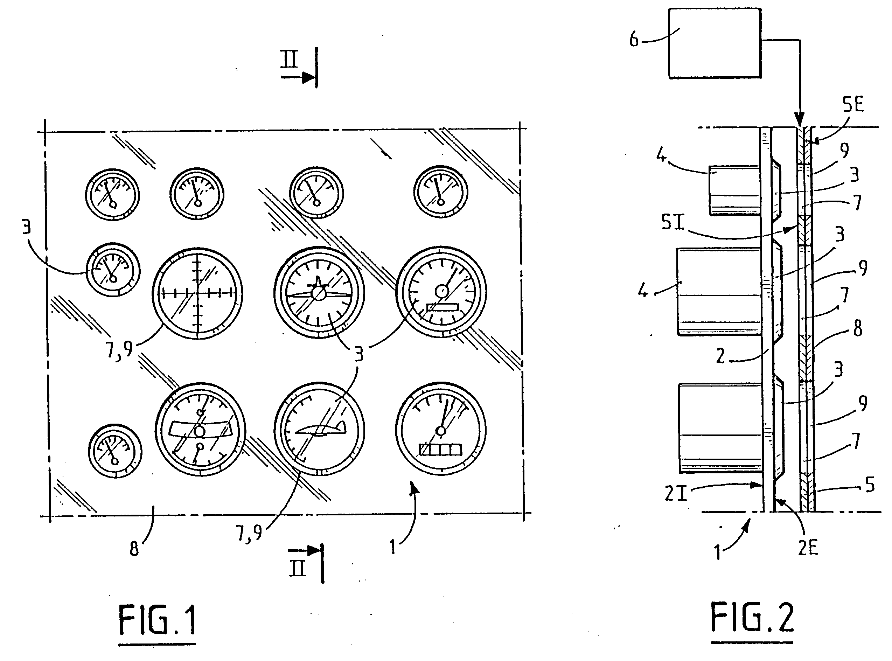

Le tableau de bord 1, conforme à la présente invention et représenté partiellement et schématiquement sur les figures 1 et 2, comporte un support 2, par exemple un panneau, sur lequel sont montés en commun des équipements 3, par exemple des cadrans, d'une pluralité d'appareils de mesure 4. Les dimensions des organes d'affichage 3 peuvent être diverses, et tous lesdits organes d'affichage 3 apparaissent sur la même face externe 2E du support 2. Les appareils de mesure 4 peuvent être fixés sur la face interne 2I du support 2.

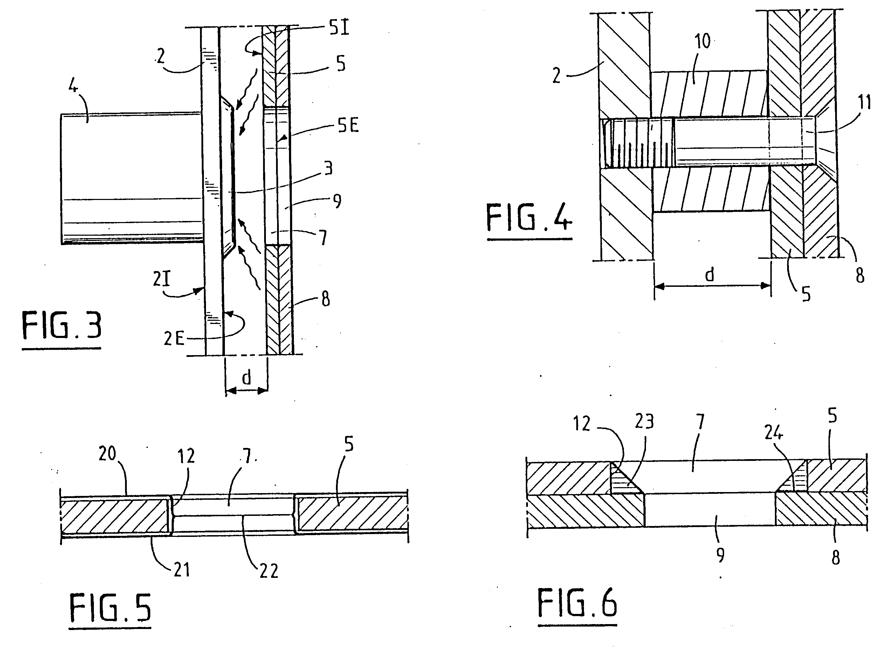

En regard de la face externe 2E du support 2, est disposée une plaque électroluminescente 5, susceptible d'être alimentée en courant électrique à moyenne fréquence par une alimentation électrique 6, la face interne éclairante 5I de ladite plaque électroluminescente 5 étant tournée vers ladite face externe 2E dudit support 2. La plaque électroluminescente 5 occupe une position fixe par rapport audit support 2 et elle est écartée de ladite face externe 2E d'une distance d (voir la figure 3). Ladite plaque électroluminescente 5 est percée d'une pluralité d'ouvertures 7, dont la disposition et les dimensions correspondent respectivement à la disposition et aux dimensions desdits équipements 3, de sorte que chacun de ceux-ci se trouve en regard d'une ouverture 7 de dimensions sensiblement égales.

La face externe, non éclairante, 5E de ladite plaque électroluminescente 5, opposée à la face externe 2E du support 2, porte un parement 8, percé d'une pluralité d'ouvertures 9 dont la disposition et les dimensions sont semblables à la disposition et aux dimensions des ouvertures 7 de la plaque électroluminescente 5 et des équipements 3.

Ainsi, chacun desdits équipements 3 est visible à travers un couple d'ouvertures 7 et 9 superposées correspondantes.

Sur les figures 2 et 3, on a supposé que ladite plaque électroluminescente 5 n'était constituée que d'un unique panneau électroluminescent.

On sait que les panneaux électroluminescents, tels que le panneau constituant la plaque 5, sont généralement constitués par un feuillet diélectrique qui contient un produit électriquement excitable et qui est disposé entre une plaque métallique formant électrode (face non éclairante 5E) et une plaque d'un verre conducteur spécial (face éclairante 5I). Cette structure est bien connue, de sorte qu'elle n'est pas représentée en détail sur les dessins, sur lesquels ledit panneau électroluminescent est monté comme s'il était homogène.

De préférence, pour la mise en oeuvre de la présente invention, on utilise des panneaux électroluminescents disponibles dans le commerce sous le nom COMTRONIC.

Lorsque l'alimentation électrique 6 établit un courant à moyenne fréquence entre ladite plaque métallique et ladite plaque de verre, ledit feuillet diélectrique s'illumine et de la lumière est émise à travers ladite plaque de verre. La tension d'alimentation, engendrée par l'alimentation électrique 6, et la fréquence de cette tension influent sur la luminance du panneau électroluminescent de la plaque 5. Par suite, la tension d'alimentation et sa fréquence peuvent être utilisées comme paramètres pour le réglage de l'éclairement des équipements 3. Grâce à ces paramètres, il est possible de régler l'éclairement à la valeur appropriée sans avoir à rajouter des éclairages d'appoint, des fibres de verre, etc ... à un éclairage de base déterminé par une étude préliminaire, comme cela est le cas pour la technique antérieure.

Bien entendu, lorsque la plaque électroluminescente 5 est alimentée, la totalité de la face extérieure 2E du support 2 est éclairée de façon pratiquement uniforme. Cependant, puisque la plaque électroluminescente 5 comporte une plaque métallique opaque et que le parement 8 est lui-même généralement opaque, un observateur regardant le tableau de bord 1 ne peut voir, de la lumière émise par ladite plaque électroluminescente 5, que celle qui est réfléchie par les équipements 3 et qui traverse les couples d'ouvertures superposées 7 et 9. On remarquera que la lumière réfléchie par un équipement 3 résulte de rayons inclinés par rapport à la face 2E (symbolisés par des flèches ondulées sur la figure 3) et provenant de la périphérie de l'ouverture 7 se trouvant en regard dudit équipement 3.

Du fait que la plaque électroluminescente 5 se trouve écartée d'une distance d du support 2, il est nécessaire de régler cette distance d, en fonction des dimensions de chaque équipement 3 et des dimensions des ouvertures 7 et 9 associées, afin que, pour un observateur décalé latéralement par rapport audit équipement, il n'en résulte pas de perte de lumière, ni de masquage de zones périphériques dudit équipement, dus à la parallaxe.

A titre d'exemple, si l'équipement 3 est un cadran circulaire ayant un diamètre de 80 mm, un écartement d compris entre 2 et 5 mm permet un éclairement satisfaisant dudit équipement sans engendrer de problèmes de parallaxe.

Comme le montre schématiquement la figure 4, l'écartement d peut être assuré par des entretoises 10, disposées entre le support commun 2, d'une part, et la plaque électroluminescente 5 et le parement 8, d'autre part. Les entretoises 10 peuvent être traversées par des vis 11 ou analogues, assurant la fixation de ladite plaque électroluminescente 5 et dudit parement 8 sur ledit support 2.

On voit qu'ainsi la plaque électroluminescente 5 et le parement 8 peuvent être facilement montés sur le support 2, ou démontés de celui-ci, en préservant à chaque remontage la distance d appropriée. Le démontage de la plaque électroluminescente 5 et du parement 8 du support 2 permet alors d'accéder aux équipements 3, par exemple en vue de leur entretien.

Pour la formation des ouvertures 7 et 9, on peut à titre optionnel (voir ci-dessus) procéder au détourage de la plaque électroluminescente 5 et du parement 8. Si les ouvertures 7 et 9 sont à chaque fois identiques (voir la figure 5), la plaque 5 et le parement 8 peuvent être superposés et même solidarisés avant détourage, pour ne nécessiter qu'une seule opération de détourage. Les bords 12 des ouvertures 7 peuvent alors être isolés électriquement à l'aide de films plastiques transparents 20, 21 recouvrant les deux faces de la plaque électroluminescente 5 et soudés entre eux, en 22, dans lesdites ouvertures 7, le long desdits bords 12 (voir la figure 5).

Si, comme cela est représenté sur la figure 6, les ouvertures 9 sont plus petites que les ouvertures 7 associées, il est bien évident que deux opérations séparées de détourage sont nécessaires. Cependant, dans ce cas, l'isolation électrique des bords 12 peut être réalisée par des joncs périphériques 23, de matière isolante, s'appuyant sur les épaulements périphériques 24 formés entre les ouvertures 7 et 9 associées, du fait de la différence de dimensions.

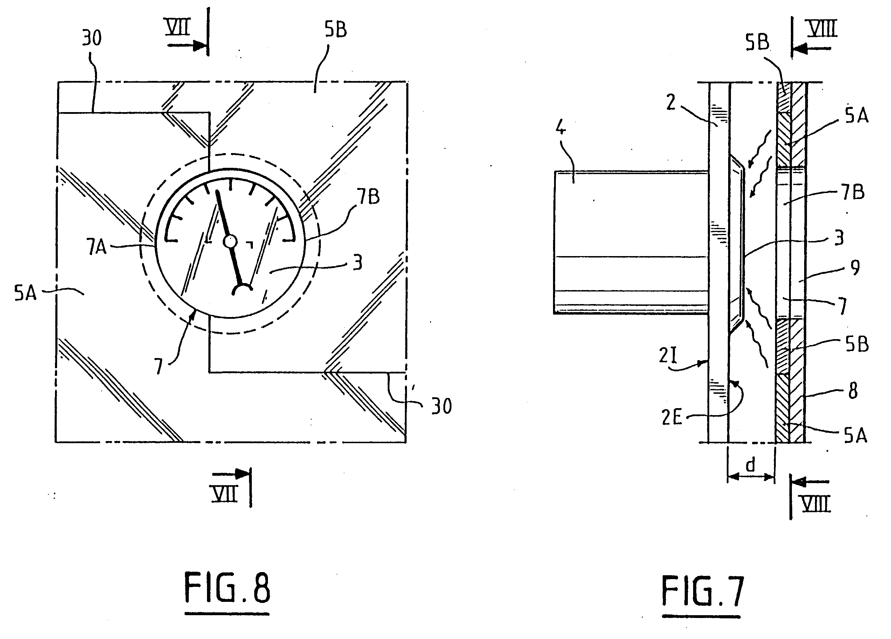

Dans la variante de réalisation des figures 7 et 8 du dispositif d'éclairage conforme à la présente invention, la plaque électroluminescente n'est plus constituée d'un seul panneau électroluminescent 5, comme cela a été décrit ci-dessus en regard des figures 2 à 6, mais au contraire elle est constituée de deux panneaux électroluminescents 5A et 5B, imbriqués de façon que chacun d'eux puisse éclairer lesdits équipements 3.

Comme on peut le voir, lesdits panneaux électroluminescents 5A et 5B sont séparés l'un de l'autre par une ligne brisée 30 partageant la périphérie de chaque ouverture 7 en deux portions consécutives 7A et 7B, appartenant respectivement au panneau 5A et au panneau 5B. De plus, les portions de périphérie 7A et 7B ne sont pas égales, mais la portion 7B est plus longue que la portion 7A.

Ainsi, le panneau électroluminescent 5B peut être utilisé pour l'éclairage des équipements 3 en fonctionnement normal, tandis que le panneau électroluminescent 5A est utilisé en secours, lorsque le panneau électroluminescent 5B est l'objet d'une panne.

Par ailleurs, les panneaux électroluminescents 5A et 5B peuvent être utilisés simultanément pour l'éclairage des équipements 3 en fonctionnement normal, et chacun desdits panneaux électroluminescents 5A ou 5B est utilisé en secours, lorsque l'autre desdits panneaux électroluminescents 5B ou 5A est l'objet d'une panne.

Parmi les avantages du dispositif d'éclairage conforme à la présente invention, on peut citer : faible masse ; homogénéité et proportionnalité d'éclairage ; souplesse mécanique, ce qui permet de suivre des évolutions de forme ; épaisseur minimale ; résistance aux vibrations ; émission de lumière monochromatique, sans scintillement et avec faible dégagement de chaleur ; faible consommation d'énergie ; durée de vie > 10.000 heures ; luminance variable en fonction des deux paramètres tension et fréquence ; possibilité de choix de la couleur.

## Revendications

1. Dispositif pour l'éclairage d'un ensemble (1) d'équipements (3), tels que des indicateurs ou des cadrans d'appareils de mesure (4), montés sur une face externe (2E) d'un support commun (2),
caractérisé en ce qu'il comporte :
- une plaque électroluminescente (5), disposée de façon que sa face éclairante (51) se trouve en regard de ladite face externe (2E) dudit support commun (2), ladite plaque électroluminescente occupant une position fixe, écartée par rapport à ladite face externe, et étant pourvue d'une pluralité d'ouvertures (7) dont la disposition et les dimensions correspondent respectivement à la disposition et aux dimensions desdits équipements (3) sur ledit support commun (2), de sorte que chacun de ceux-ci se trouve en regard d'une ouverture (7) de dimensions appropriées de ladite plaque électroluminescente ;
- un parement (8), disposé sur la face non éclairante (5E) de ladite plaque électroluminescente (5), opposée à ladite face externe (2E) dudit support commun (2), et également pourvu d'une pluralité d'ouvertures (9) dont la disposition et les dimensions sont semblables à la disposition et aux dimensions des ouvertures (7) de ladite plaque électroluminescente (5) ; et
- des moyens (6) d'alimentation électrique de ladite plaque électroluminescente (5).

2. Dispositif d'éclairage selon la revendication 1,
caractérisé en ce que lesdits moyens (6) d'alimentation délivrent une tension alternative de quelques dizaines à quelques centaines de volts ayant une fréquence de quelques dizaines à quelques centaines de Hertz.

3. Dispositif d'éclairage selon l'une des revendications 1 ou 2,
caractérisé en ce que ladite plaque électroluminescente (5) n'est constituée que d'un seul panneau électroluminescent.

4. Dispositif d'éclairage selon l'une des revendications 1 ou 2,
caractérisé en ce que ladite plaque électroluminescente (5) est constituée d'au moins deux panneaux électroluminescents (5A, 5B), imbriqués de façon que chacun d'eux puisse éclairer lesdits équipements (3).

5. Dispositif d'éclairage selon la revendication 4,
caractérisé en ce que la périphérie de chacune desdites ouvertures (7) de ladite plaque électroluminescente est constituée de portions consécutives (7A, 7B) appartenant à des panneaux (5A, 5B) différents.

6. Dispositif d'éclairage selon la revendication 5,
caractérisé en ce que ladite plaque électroluminescente (5) est constituée de deux panneaux électroluminescents imbriqués (5A, 5B), tels que la portion de périphérie (7B) de chacune desdites ouvertures (7) de ladite plaque (5) appartenant à l'un desdits panneaux (5B) est plus grande que la portion de périphérie (7A) de ladite ouverture (7) appartenant à l'autre desdits panneaux (5A).

7. Dispositif d'éclairage selon l'une quelconque des revendications 4 à 6,
caractérisé en ce que l'un (5B) desdits panneaux électroluminescents (5A, 5B) est utilisé pour l'éclairage desdits équipements (3) en fonctionnement normal, tandis que l'autre (5A) desdits panneaux électroluminescents est utilisé en secours, lorsque ledit panneau électroluminescent (5B) d'éclairage normal est l'objet d'une panne.

8. Dispositif d'éclairage selon l'une quelconque des revendications 4 à 6,
caractérisé en ce que lesdits panneaux électroluminescents (5A, 5B) sont utilisés simultanément pour l'éclairage desdits équipements (3) en fonctionnement normal et en ce que chacun desdits panneaux électroluminescents (5A ou 5B) est utilisé en secours, lorsque l'autre desdits panneaux électroluminescents (5B ou 5A) est l'objet d'une panne.

9. Ensemble (1) d'équipements (3), tels que des indicateurs ou des cadrans d'appareils de mesure (4), montés sur une face externe (2E) d'un support commun (2),
caractérisé en ce qu'il comporte :
- une plaque électroluminescente (5), disposée de façon que sa face éclairante (5I) se trouve en regard de ladite face externe (2E) dudit support commun (2), ladite plaque électroluminescente occupant une position fixe, écartée par rapport à ladite face externe, et étant pourvue d'une pluralité d'ouvertures (7) dont la disposition et les dimensions correspondent respectivement à la disposition et aux dimensions desdits équipements (3) sur ledit support commun (2), de sorte que chacun de ceux-ci se trouve en regard d'une ouverture (7) de dimensions appropriées de ladite plaque électroluminescente ; et
- un parement (8), disposé sur la face non éclairante (5E) de ladite plaque électroluminescente (5), opposée à ladite face externe (2E) dudit support commun (2), et également pourvu d'une pluralité d'ouvertures (9) dont la disposition et les dimensions sont semblables à la disposition et aux dimensions des ouvertures (7) de ladite plaque électroluminescente (5).

10. Ensemble (1) d'équipements (3) selon la revendication 9, caractérisé en ce que l'écartement (d) entre la face externe (2E) dudit support commun (2) et ladite plaque électroluminescente (5) est de quelques millimètres.

11. Ensemble (1) d'équipements (3) selon l'une quelconque des revendications 9 ou 10,
caractérisé en ce que ledit écartement (d) est fixé par des entretoises (10) disposées entre ledit support commun et ladite plaque électroluminescente.

12. Ensemble (1) d'équipements (3) selon la revendication 11,
caractérisé en ce que lesdites entretoises (10) sont associées à des moyens de fixation de ladite plaque électroluminescente (5) et dudit parement (8) sur ledit support commun (2).

13. Ensemble (1) d'équipements (3) selon l'une quelconque des revendications 9 à 12,
caractérisé en ce que lesdites ouvertures (7) de ladite plaque électroluminescente (5) sont réalisées, sans perçage, lors de la fabrication de cette dernière.

14. Ensemble (1) d'équipements (3) selon l'une quelconque des revendications 9 à 12,
caractérisé en ce que lesdites ouvertures (7) de ladite plaque électroluminescente (5) sont obtenues par détourage dans cette dernière.

15. Ensemble (1) d'équipements (3) selon la revendication 14,
caractérisé en ce que les bords (12) des ouvertures (7) détourées dans ladite plaque électroluminescente (5) sont électriquement isolés.

16. Ensemble (1) d'équipements (3) selon la revendication 15,
caractérisé en ce que l'isolation électrique des bords (12) des ouvertures (7) de la plaque électroluminescente (5) est obtenue à l'aide de films plastiques transparents (20, 21) recouvrant les deux faces de ladite plaque électroluminescente (5) et soudés entre eux (en 22) dans lesdites ouvertures (7), le long desdits bords (12).

17. Ensemble (1) d'équipements (3) selon la revendication 15,
caractérisé en ce que chaque ouverture (9) dudit parement (8) est plus petite que l'ouverture associée (7) de ladite plaque électroluminescente (5), de façon à former des épaulements périphériques (24) autour des bords (22) desdites ouvertures (7) et en ce que l'isolation électrique desdits bords (12) des ouvertures (7) de la plaque électroluminescente (5) est obtenue par des joncs périphériques de matière isolante (23), reposant sur lesdits épaulements (24).

## Claims

1. A device for illuminating a set (1) of equipment items (3), such as indicators or dials of measurement apparatus (4), which are mounted on an outer face (2E) of a common support (2), characterized in that it includes:
- an electroluminescent plate (5), arranged in such a way that its illuminating face (5I) is opposite said outer face (2E) of said common support (2), said electroluminescent plate occupying a fixed position, spaced away from said outer face, and being provided with a plurality of apertures (7), the arrangement and the dimensions of which correspond respectively to the arrangement and to the dimensions of said equipment items (3) on said common support (2), so that each of them is opposite an aperture (7) of appropriate dimensions of said electroluminescent plate;
- a facing (8), arranged on the non-illuminating face (5E) of said electroluminescent plate (5), opposite said outer face (2E) of said common support (2), and also provided with a plurality of apertures (9), the arrangement and the dimensions of which are similar to the arrangement and to the dimensions of the apertures (7) of said electroluminescent plate (5); and
- electrical power supply means (6) for said electroluminescent plate (5).

2. The illumination device as claimed in claim 1, characterized in that said power supply means (6) deliver an alternating voltage of a few tens to a few hundreds of volts having a frequency of a few tens to a few hundreds of Hertz.

3. The illumination device as claimed in either of claims 1 and 2, characterized in that said electroluminescent plate (5) consists only of a single electroluminescent panel.

4. The illumination device as claimed in either of claims 1 and 2, characterized in that said electroluminescent plate (5) consists of at least two electroluminescent panels (5A, 5B), imbricated in such a way that each of them can illuminate said equipment items (3).

5. Illumination device according to claim 4, characterized in that the periphery of each of said apertures (7) of said electroluminescent plate consists of consecutive portions (7A, 7B) belonging to different panels (5A, 5B).

6. The illumination device as claimed in claim 5, characterized in that said electroluminescent plate (5) consists of two imbricated electroluminescent panels (5A, 5B), such that the peripheral portion (7B) of each of said apertures (7) of said plate belonging to one of said panels (5B) is larger than the peripheral portion (7A) of said aperture (7) belonging to the other of said panels (5A).

7. The illumination device as claimed in any one of claims 4 to 6, characterized in that one (5B) of said electroluminescent panels (5A, 5B) is used for illumination of said equipment items (3) in normal operation, while the other (5A) of said electroluminescent panels is used as backup, when said electroluminescent panel (5B) for normal illumination suffers a breakdown.

8. The illumination device as claimed in any one of claims 4 to 6, characterized in that said electroluminescent panels (5A, 5B) are used simultaneously for illuminating said equipment items (3) in normal operation and in that each of said electroluminescent panels (5A or 5B) is used as backup, when the other of said electroluminescent panels (5B or 5A) suffers a breakdown.

9. A set (1) of equipment items (3), such as indicators or dials of measurement apparatus (4), which are mounted on an outer face (2E) of a common support (2), characterized in that it includes:
- an electroluminescent plate (5), arranged in such a way that its illuminating face (5I) is opposite said outer face (2E) of said common support (2), said electroluminescent plate occupying a fixed position, spaced away from said outer face, and being provided with a plurality of apertures (7), the arrangement and the dimensions of which correspond respectively to the arrangement and to the dimensions of said equipment items (3) on said common support (2), so that each of them is opposite an aperture (7) of appropriate dimensions of said electroluminescent plate; and
- a facing (8), arranged on the non-illuminating face (5E) of said electroluminescent plate (5), opposite said outer face (2E) of said common support (2), and also provided with a plurality of apertures (9), the arrangement and the dimensions of which are similar to the arrangement and to the dimensions of the apertures (7) of said electroluminescent plate (5).

10. The set (1) of equipment items (3) as claimed in claim 9, characterized in that the spacing (d) between the outer face (2E) of said common support (2) and said electroluminescent plate (5) is of a few millimetres.

11. The set (1) of equipment items (3) as claimed in either of claims 9 and 10, characterized in that said spacing (d) is fixed by spacers (10) arranged between said common support and said electroluminescent plate.

12. The set (1) of equipment items (3) as claimed in claim 11, characterized in that said spacers (10) are combined with means of fixing said electroluminescent plate (5) and said facing (8) onto said common support (2).

13. The set (1) of equipment items (3) as claimed in any one of claims 9 to 12, characterized in that said apertures (7) of said electroluminescent plate (5) are produced, without piercing, during the manufacture of the latter.

14. The set (1) of equipment items (3) as claimed in any one of claims 9 to 12, characterized in that said apertures (7) of said electroluminescent plate (5) are obtained by cutting-out in the latter.

15. The set (1) of equipment items (3) as claimed in claim 14, characterized in that the edges (12) of the apertures (7) cut out in said electroluminescent plate (5) are electrically insulated.

16. The set (1) of equipment items (3) as claimed in claim 15, characterized in that the electrical insulation of the edges (12) of the apertures (7) of the electroluminescent (5) is obtained by the use of transparent plastic films (20, 21) covering the two faces of said electroluminescent plate (5) and welded together (at 22) in said apertures (7), along said edges (12).

17. The set (1) of equipment items (3) as claimed in claim 15, characterized in that each aperture (9) of said facing (8) is smaller than the associated aperture (7) of said electroluminescent plate (5), in such a way as to form peripheral shoulders (24) around the edges (22) of said apertures (7), and in that the electrical insulation of said edges (12) of the apertures (7) of said electroluminescent plate (5) is obtained by peripheral rings of insulating material (23), resting on said shoulders (24).

## Patentansprüche

1. Vorrichtung zur Beleuchtung einer Einheit (1) von Geräten (3), wie Anzeigeeinrichtungen oder Instrumente von Meßgeräten (4), die auf einer Außenseite (2E) eines gemeinsamen Trägers (2) angebracht sind,
dadurch gekennzeichnet, daß sie umfaßt:
- eine Elektrolumineszenzscheibe (5), die derart angeordnet ist, daß sich ihre leuchtende Seite (5I) gegenüber der Außenseite (2E) des gemeinsamen Trägers (2) befindet, wobei die Elektrolumineszenzplatte eine feste Position einnimmt, die im Abstand von der Außenseite liegt, und mit einer Vielzahl von Öffnungen (7) versehen ist, deren Anordnung und Abmessungen der Anordnung bzw. den Abmessungen der Geräte (3) auf dem gemeinsamen Träger (2) entsprechen, so daß jedes von ihnen sich gegenüber einer Öffnung (7) mit geeigneten Abmessungen der Elektrolumineszenzscheibe befindet,
- eine Verkleidung (8), die auf der nicht leuchtenden Seite (5E) der Elektrolumineszenzscheibe (5) angeordnet ist, die der Außenseite (2E) des gemeinsamen Trägers (2) entgegengesetzt ist, und ebenfalls mit einer Vielzahl von Öffnungen (9) versehen ist, deren Anordnung und Abmessungen der Anordnung und den Abmessungen der Öffnungen (7) der Elektrolumineszenzscheibe (5) ähnlich sind; und
- Mittel (6) für die elektrische Stromversorgung der Elektrolumineszenzscheibe (5).

2. Beleuchtungsvorrichtung nach Anspruch 1, dadurch gekennzeichnet, daß die Stromversorgungsmittel (6) eine Wechselspannung von einigen Zehn bis einigen Hundert Volt mit eine Frequenz von einigen Zehn bis einigen Hundert Hertz liefert.

3. Beleuchtungsvorrichtung nach einem der Ansprüche 1 oder 2, dadurch gekennzeichnet, daß die Elektrolumineszenzscheibe (5) nur aus einer einzigen Elektrolumineszenzplatte besteht.

4. Beleuchtungsvorrichtung nach einem der Ansprüche 1 oder 2, dadurch gekennzeichnet, daß die Elektrolumineszenzscheibe (5) aus wenigstens zwei Elektrolumineszenzplatten (5A, 5B) besteht, die derart ineinandergeschoben sind, daß jede von ihnen die Geräte (3) beleuchten kann.

5. Beleuchtungsvorrichtung nach Anspruch 4, dadurch gekennzeichnet, daß der Umfang jeder der Öffnungen (7) der Elektrolumineszenzscheibe aus aufeinanderfolgenden Abschnitten (7A, 7B) besteht, die zu verschiedenen Platten (5A, 5B) gehören.

6. Beleuchtungsvorrichtung nach Anspruch 5, dadurch gekennzeichnet, daß die Elektrolumineszenzscheibe (5) aus zwei ineinandergeschobenen Elektrolumineszenzplatten (5A, 5B) besteht, derart, daß der Umfangsabschnitt (7B) jeder der Öffnungen (7) der Scheibe (5), der zu einer (5B) der Platten gehört, größer ist als der Umfangsabschnitt (7A) der Öffnung (7), der zur anderen (5A) der Platten gehört.

7. Beleuchtungsvorrichtung nach einem der Ansprüche 4 bis 6, dadurch gekennzeichnet, daß die eine (5B) der Elektrolumineszenzplatten (5A, 5B) zur Beleuchtung der Geräte (3) bei normalem Betrieb verwendet wird, während die andere (5A) der Elektrolumineszenzplatten zu Hilfe genommen wird, wenn die Elektrolumineszenzplatte zur normalen Beleuchtung einen Defekt hat.

8. Beleuchtungsvorrichtung nach einem der Ansprüche 4 bis 6, dadurch gekennzeichnet, daß die Elektrolumineszenzplatten (5A, 5B) gleichzeitig zur Beleuchtung der Geräte (3) im normalen Betrieb verwendet werden, und daß jede der Elektrolumineszenzplatten (5A oder 5B) zu Hilfe benommen wird, wenn die andere der Elektrolumineszenzplatten (5B oder 5A) einen Defekt hat.

9. Einheit (1) von Geräten (3), wie Anzeigeeinrichtungen oder Instrumente von Meßgeräten (4), die auf einer Außenseite (2E) eines gemeinsamen Trägers (2) angebracht sind,
dadurch gekennzeichnet, daß sie umfaßt:
- eine Elektrolumineszenzscheibe (5), die derart angeordnet ist, daß sich ihre leuchtende Seite (5I) gegenüber der Außenseite (2E) des gemeinsamen Trägers (2) befindet, wobei die Elektrolumineszenzscheibe eine feste Position einnimmt, die im Abstand von der Außenseite liegt, und mit einer Vielzahl von Öffnungen (7) versehen ist, deren Anordnung und Abmessungen der Anordnung bzw. den Abmessungen der Geräte (3) am gemeinsamen Träger (2) entsprechen, so daß jedes von ihnen sich gegenüber einer Öffnung (7) mit geeigneten Abmessungen der Elektrolumineszenzscheibe befindet; und
- eine Verkleidung 8, die auf der nicht leuchtenden Seite (5E) der Elektrolumineszenzscheibe (5) angeordnet ist, die der Außenseite (2E) des gemeinsamen Trägers (2) entgegengesetzt ist, und ebenfalls mit einer Vielzahl von Öffnungen (9) versehen ist, deren Anordnung und Abmessungen der Anordnung und den Abmessungen der Öffnungen (7) der Elektrolumineszenzscheibe (5) ähnlich sind.

10. Einheit (1) von Geräten (3) nach Anspruch 9, dadurch gekennzeichnet, daß der Abstand (d) zwischen der Außenseite (2E) des gemeinsamen Trägers (2) und der Elektrolumineszenzscheibe (5) einige Millimeter beträgt.

11. Einheit (1) von Geräten (3) nach einem der Ansprüche 9 oder 10, dadurch gekennzeichnet, daß der Abstand (d) durch Zwischenstücke (10) festgelegt ist, die zwischen den gemeinsamen Träger und der Elektrolumineszenzscheibe angeordnet sind.

12. Einheit (1) von Geräten (3) nach Anspruch 11, dadurch gekennzeichnet, daß die Zwischenstücke (10) mit Mitteln zur Befestigung der Elektrolumineszenzscheibe (5) und der Verkleidung (8) auf dem gemeinsamen Träger (2) verbunden sind.

13. Einheit (1) von Geräten (3) nach einem der Ansprüche 9 bis 12, dadurch gekennzeichnet, daß die Öffnungen (7) der Elektrolumineszenzscheibe (5) ohne Bohren bei der Herstellung realisiert werden.

14. Einheit (1) von Geräten (3) nach einem der Ansprüche 9 bis 12, dadurch gekennzeichnet, daß die Öffnungen (7) der Elektrolumineszenzplatte (5) durch Formschneiden erhalten werden.

15. Einheit (1) von Geräten (3) nach Anspruch 14, dadurch gekennzeichnet, daß die Ränder (12) der in der Elektrolumineszenzscheibe (5) formgeschnittenen Öffnungen (7) elektrisch isoliert sind.

16. Einheit (1) von Geräten (3) nach Anspruch 15, dadurch gekennzeichnet, daß die elektrische Isolierung der Ränder (12) der Öffnungen (7) der Elektrolumineszenzscheibe (5) mit Hilfe von transparenten Kunststoffilmen (20, 21) erhalten wird, die die beiden Flächen der Elektrolumineszenzscheibe (5) bedecken und (bei 22) in den Öffnungen (7) entlang der Ränder (12) miteinander verschweißt sind.

17. Einheit (1) von Geräten (3) nach Anspruch 15, dadurch gekennzeichnet, daß die Öffnung (9) der Verkleidung (8) kleiner als die zugehörige Öffnung (7) der Elektrolumineszenzscheibe (5) ist, um Umfangsschultern (24) um die Ränder (22) der Öffnungen (7) zu bilden, und daß die elektrische Isolierung der Ränder (12) der Öffnungen (7) der Elektrolumineszenzscheibe (5) durch Umfangsringe (23) aus isolierendem Material erhalten wird, die auf den Schultern (24) ruhen.
